# EUROPEAN PATENT APPLICATION

(11) **EP 2 301 776 A1**
(43) Date of publication of application: **30.03.2011**
(21) Application number: 10177228.3
(22) Date of filing: 16.09.2010
(51) Int. Cl.: B60H 1/00

(54) **Vehicular air conditioning apparatus**

(30) Priority: 25.09.2009 JP 2009220729
(71) Applicant: Keihin Corporation, Tokyo 163-0539 (JP)
(72) Inventor: Ikeda, Shintaro, Tochigi-ken 329-1233 (JP)
(74) Representative: Prechtel, Jörg

(57) **Abstract**

In a vehicular air conditioning apparatus (10), a driving force transmission mechanism (22) is provided, which causes a switching operation of an air mixing damper (18) disposed in a casing (12) to be performed under a driving action of a drive source (20). The driving force transmission mechanism (22) includes a first gear (44) installed on the drive source (20), a second gear (46) enmeshed with the first gear (44), and a damper shaft (50), which is enmeshed with the second gear (46) and with a rack member (32) of the air mixing damper (18). The second gear (46) is supported rotatably on a gear holder (48), while the gear holder (48) is installed on a side surface of the casing (12).

## Description

### BACKGROUND OF THE INVENTION

### Field of the Invention:

The present invention relates to a vehicular air conditioning apparatus, which is equipped with a control mechanism for controlling operation of a switching door that switches the communication state of a fluid passage through which air is introduced from the exterior or the interior of a vehicle.

### Description of the Related Art:

Heretofore, in a vehicular air conditioning apparatus that is mounted in a passenger vehicle, interior and exterior air is drawn into a housing by a blower fan. Cool air, which is cooled by an evaporator that forms a cooling means, and warm air, which is heated by a heater core that forms a heating means, are mixed together at a desired mixing ratio in the housing interior by adjusting the degree of opening of an air mixing damper. The mixed air then is blown selectively by opening and closing outlet doors, which are disposed respectively in each of outlet ports disposed in the vehicle compartment, for adjusting the temperature and humidity inside the vehicle compartment. The air mixing damper and outlet doors include axes, which are supported axially with respect to the housing, such that, by being rotated a predetermined angle about such axes, the mixing ratio of the cool air and the warm air, or the opening condition (degree of opening/closing) of the outlet ports can be switched.

With the aforementioned vehicular air conditioning apparatus, for example, as disclosed in Japanese Laid-Open Patent Publication No. 10-250349, a drive source made up from a servo motor or the like is disposed on the exterior of the housing. A driving force of the drive source is transmitted by an output shaft to an arm-shaped first link member, such that by being rotated through a predetermined angle, an arm-shaped second link member, which is axially supported on one end of the first link member, is operated rotatably in a successive fashion. In addition, because a pin, which is inserted through one end of the second link member, is inserted into a groove formed in a switching door constituting an air mixing damper or the like, under a rotary action of the second link member, the air mixing damper or the like is rotated at a predetermined angle. More specifically, a driving force of the drive source is transmitted to the switching door via the first and second link members, whereby an opening/closing operation of the switching door is carried out.

However, with the aforementioned vehicular air conditioning apparatus, because the drive section (i.e., the drive source), the first link member, and the second link member are disposed on a side surface of the housing, when the vehicular air conditioning apparatus is mounted inside an engine room of the vehicle, for example, the drive source cannot be arranged in the vicinity of the switching door due to restrictions in the layout of the engine room, and thus, cases occur in which it is problematic and difficult for the driving force of the drive section to be transmitted to the switching door through the first and second link members.

### SUMMARY OF THE INVENTION

A general object of the present invention is to provide a vehicular air conditioning apparatus, in which assembly operations can easily be performed, even in the case that a switching door and a drive section are arranged in a separated fashion from one another, and further, wherein a driving force from the drive section can reliably be transmitted to the switching door.

The present invention is characterized by a vehicular air conditioning apparatus for adjusting a temperature of air that is introduced from exterior or interior of a vehicle to a predetermined temperature, and for supplying the air to the vehicle interior, comprising:
a casing;
a switching damper disposed in interior of the casing for switching a communication state of a flow passage through which the air flows;
a drive section disposed on the casing, which is rotatably driven upon supply of electricity thereto; and
a driving force transmission mechanism including a drive gear connected to a rotary shaft of the drive section, a damper gear disposed on a rotary shaft of the switching damper, a transmission gear disposed between the drive gear and the damper gear and enmeshed mutually therewith, and a holder installed on the casing for rotatably holding the transmission gear.

According to the present invention, in the driving force transmission mechanism, which is capable of transmitting a driving force of the drive section to the switching damper accommodated inside the casing, there is provided the transmission gear, which is enmeshed with the drive gear connected to the drive section, as well as with the damper gear that rotates the switching damper. The transmission gear is supported rotatably by the holder, which is installed on the casing.

Accordingly, in the casing that makes up the vehicular air conditioning apparatus, even in the case that the drive section and the switching damper are positioned in a separated manner from one another, by means of the transmission gear, which is disposed between the drive gear and the damper gear, the driving force output from the drive gear can reliably and efficiently be transmitted with respect to the damper gear. Together therewith, since the driving force transmission mechanism including the transmission gear can easily be assembled by installing the holder onto the casing, ease of assembly of the driving force transmission mechanism can be improved.

The above and other objects, features and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

FIG. 1 is an exterior perspective view of a vehicular air conditioning apparatus according to an embodiment of the present invention;
FIG. 2 is an overall cross sectional view of the vehicular air conditioning apparatus shown in FIG. 1;
FIG. 3 is a perspective view with partial omission showing the relationship between a drive source, a driving force transmission mechanism, and an air mixing damper;
FIG. 4 is a perspective view with partial omission showing the features of FIG. 3, as seen from a different direction;
FIG. 5 is a front view of a driving force transmission unit made up from a driving section and the driving force transmission mechanism;
FIG. 6 is a rear view of the driving force transmission unit shown in FIG. 5, as seen from a side of the casing;
FIG. 7 is a front view showing an enmeshed condition of a first gear, a second gear, and a damper gear that make up the driving force transmission mechanism;
FIG. 8 is a plan view of the enmeshed condition of the first gear, the second gear, and the damper gear shown in FIG. 7 as seen from an opposite side;
FIG. 9 is an exterior perspective view of a second gear that constitutes part of a driving force transmission mechanism; and
FIG. 10 is an enlarged perspective view showing the vicinity of a damper gear on a damper shaft that constitutes part of the driving force transmission mechanism.

### DESCRIPTION OF THE PREFERRED EMBODIMENTS

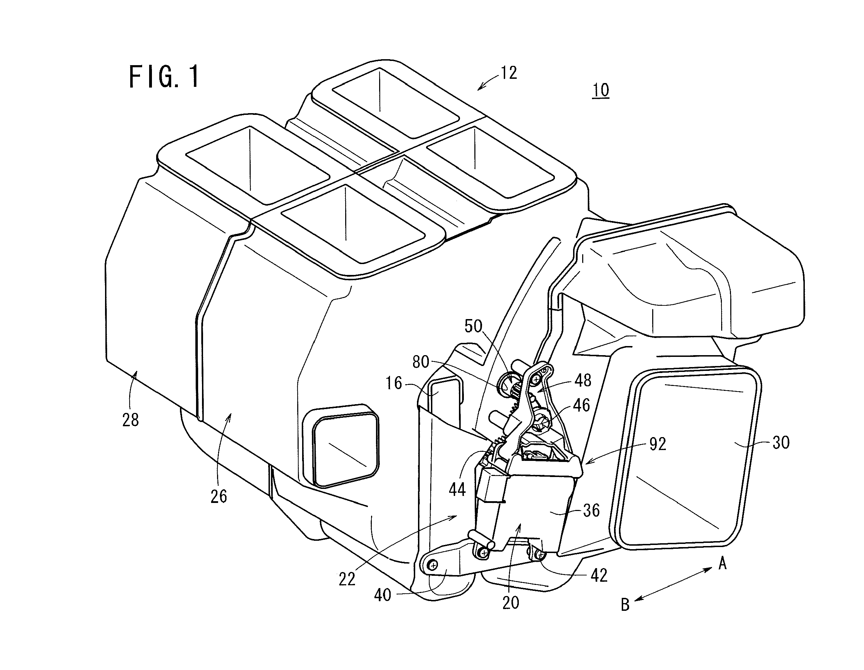

In FIG. 1, reference numeral 10 indicates a vehicular air conditioning apparatus according to an embodiment of the present invention.

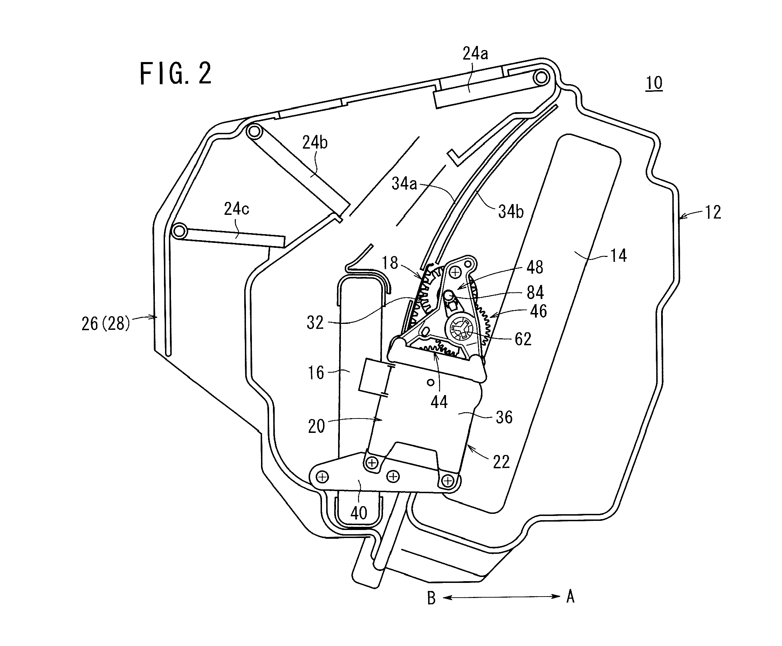

As shown in FIGS. 1 and 2, the vehicular air conditioning apparatus 10 includes a casing 12 constituted by a plurality of respective air passages therein, an evaporator 14 arranged in the interior of the casing 12 that cools the air, a heater core 16 for heating the air, an air mixing damper (switching damper) 18 that performs heat exchange by means of the evaporator 14 and the heater core 16 on air that is introduced to the interior of the casing 12, and which mixes at a predetermined mixing ratio cool air and warm air having been adjusted in temperature, thereby producing mixed air, and a driving force transmission mechanism 22 that transmits a driving force of a drive source (drive section) 20, which is disposed on a side surface of the casing 12, to the air mixing damper 18 for causing rotary displacement thereof.

Further, in the interior of the casing 12, a plurality of outlet port dampers 24a to 24c are provided for selectively supplying into the vehicle compartment the mixed air from each of the opened outlet ports.

The vehicular air conditioning apparatus 10 is installed such that the right side shown in FIG. 1 (the direction of the arrow A) forms a front side thereof, and the left side shown in FIG. 1 (the direction of the arrow B) forms a rear side thereof. Thus, in the explanations given below, the arrow A direction shall be referred to as a forward direction, whereas the arrow B direction shall be referred to as a rearward direction.

The casing 12 is made up from substantially symmetrically shaped first and second divided casings 26, 28. In an open portion thereof that opens on a side of the first divided casing 26, a duct 30 is installed, which is connected to a blower fan, through which air is introduced into the interior of the casing 12.

Further, in the interior of the casing 12, the evaporator 14 is disposed, which is positioned in the vicinity of an opening portion at the forward side (in the direction of the arrow A) in the vehicular air conditioning apparatus 10. Also, the heater core 16 is separated a predetermined distance from the evaporator 14 and disposed on the rearward side (in the direction of the arrow B) in the casing 12. The air mixing damper 18 is disposed between the evaporator 14 and the heater core 16, for adjusting the flow amount of air, which has been cooled by the evaporator 14, and which flows to the side of the heater core 16 when flowing toward the downstream side in the casing 12 (see FIG. 2).

As shown in FIGS. 2 to 4, the air mixing damper 18 comprises a plate, which is arcuate shaped in cross section having a comparatively large radius of curvature, and which is formed with a substantially constant thickness. In addition, the air mixing damper 18 is disposed respectively in the first and second divided casings 26, 28, and is disposed so as to be convexly shaped in a direction away from the evaporator 14.

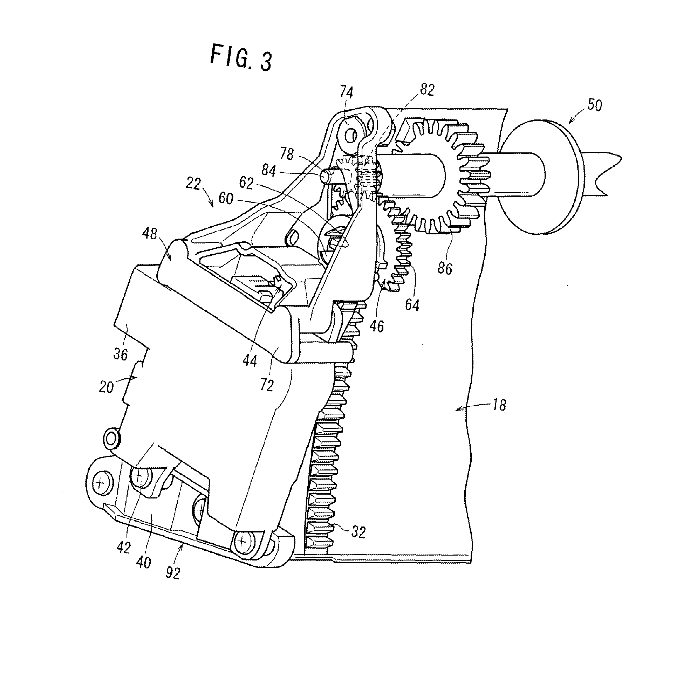

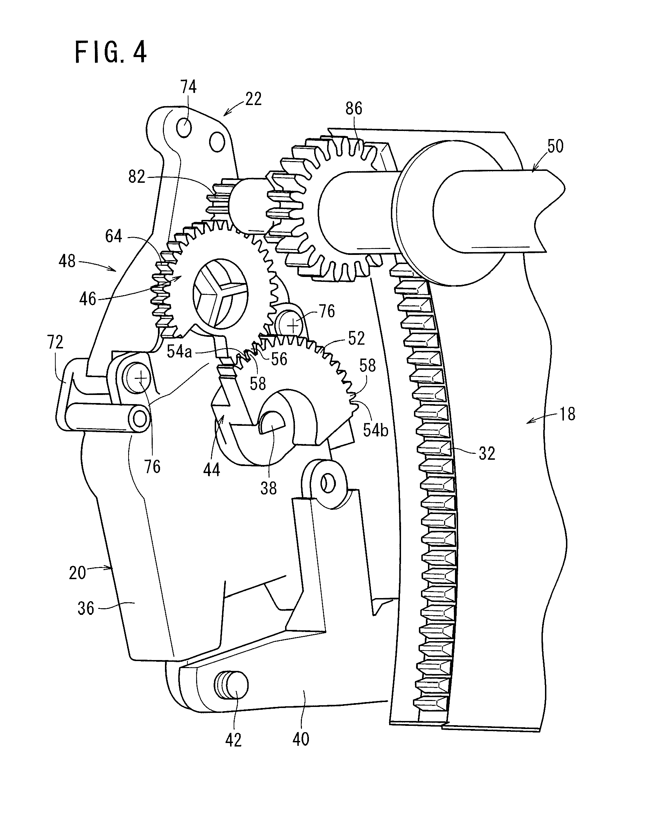

On the other hand, as shown in FIGS. 3 and 4, on an inner wall surface of the air mixing damper 18 facing the evaporator 14, a rack member 32 is formed, which is enmeshed with a damper shaft (rotary shaft) 50 of the driving force transmission mechanism 22. The rack member 32 extends from one end portion to the other end portion of the air mixing damper 18 that faces the inner wall surfaces of the first and second divided casings 26, 28. Thus, the rack member 32 extends along the inner wall surfaces of the first and second divided casings 26, 28.

Further, the air mixing damper 18 is disposed in a widthwise direction along the casing 12. Both side ends of the air mixing damper 18 are guided along a pair of guide walls 34a, 34b, the guide walls 34a, 34b being disposed on inner wall surfaces of the first and second divided casings 26, 28. In the following description, an explanation shall be given only of the air mixing damper 18 disposed on the side of the first divided casing 26.

In the event that the air mixing damper 18 is positioned downward so as to face the heater core 16 in the interior of the casing 12, air that passes through the evaporator 14 is prevented by the air mixing damper 18 from flowing through to the heater core 16. On the other hand, in the event that the air mixing damper 18 is moved upwardly away from the heater core 16, air that passes through the evaporator 14 is allowed to flow to the heater core 16. Further, if the air mixing damper 18 is disposed in an intermediate position, a portion of the air that passes through the evaporator 14 flows through to the heater core 16, whereas the remaining air flows into the interior of the casing 12 without flowing to the side of the heater core 16.

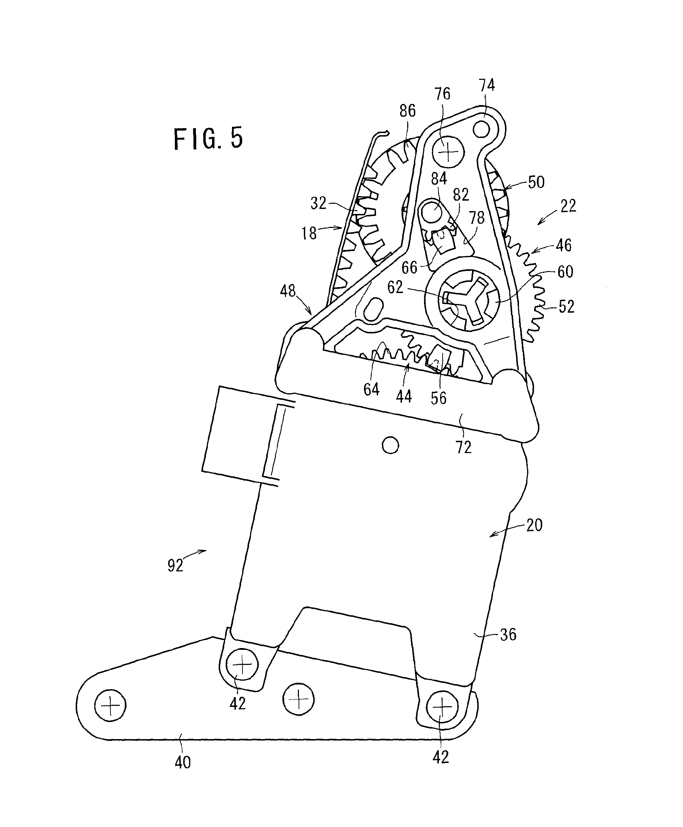

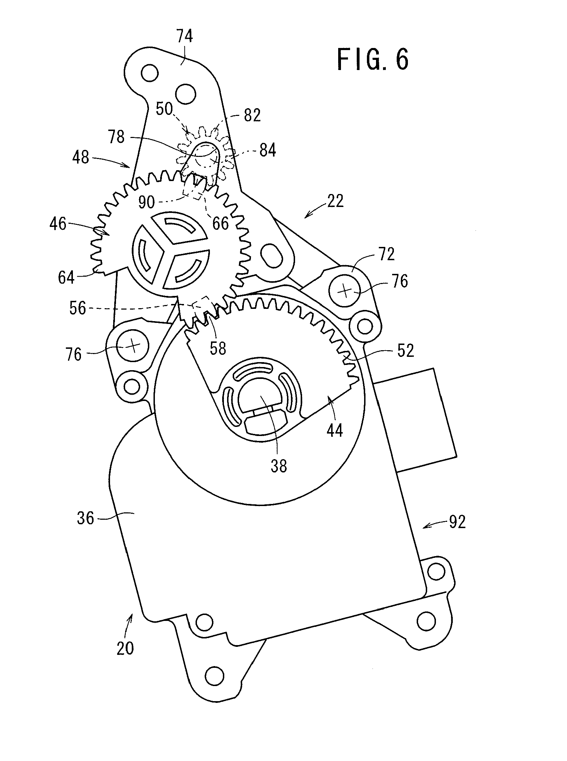

As shown in FIGS. 3 to 6, the drive source 20 is made up from a servo motor, for example, rotation of which is controlled based on a control signal from a non-illustrated controller, and includes a housing 36, and a rotary drive shaft (rotary shaft) 38 disposed substantially centrally in the housing 36 (see FIGS. 4 and 6). In addition, the drive source 20, for example, is fixed with respect to a side surface of the first divided casing 26 via a mounting bracket 40 having a plurality of attachment members. The mounting bracket 40 is formed substantially in a T shape, and is fixed through plural bolts 42 at a position downwardly from the drive source 20 on the first divided casing 26. In this case, the drive source 20 is fixed such that the drive shaft 38 thereof faces toward a side surface of the first divided casing 26, in a state of being separated a predetermined distance with respect to the side surface.

The driving force transmission mechanism 22, as shown in FIGS. 3 to 8, includes a first gear (drive gear) 44 installed on the drive shaft 38 of the drive source 20, a second gear (transmission gear) 46 held in mesh with the first gear 44, a gear holder (holder) 48 connected to the housing 36 of the drive source 20 and which supports the second gear 46, and a damper shaft 50 enmeshed with the second gear 46 and with the rack member 32 of the air mixing damper 18.

The first gear 44 is formed in a fan-like shape, and is connected to the drive shaft 38 via a hole formed in a central portion thereof. By being fixed to the drive shaft 38, which is formed with a semicircular shape in cross section, relative rotational displacement between the first gear 44 and the drive shaft 38 is regulated. More specifically, the first gear 44 is rotatably driven in unison (integrally) with drive actions of the drive source 20. Additionally, the first gear 44 is disposed between the drive source 20 and the side surface of the first divided casing 26.

Further, on the outer circumferential region of the first gear 44, a plurality of first gear teeth 52 of a radially concave/convex shape are formed along the circumferential direction. In the vicinity of opposite ends thereof on the outer circumferential region, a pair of first locator grooves 54a, 54b, from which the first gear teeth 52 are lacking, are formed respectively. The first locator grooves 54a, 54b are formed with predetermined widths centrally about the position of a central first gear tooth 52 from among three adjacent first gear teeth 52, and are formed so as to enable insertion therein respectively of first and second locator parts 56, 66 (described later) which make up part of the second gear 46.

The first locator grooves 54a, 54b are formed with substantially trapezoidal shapes in cross section along the thickness direction of the first gear 44. First narrow teeth 58 are formed in the first locator grooves 54a, 54b, having a width dimension from a central region of the aforementioned thickness direction to an end surface on the side of the drive source 20. The first narrow teeth 58 are formed to be narrower than the first gear teeth 52 and at the same pitch as the first gear teeth 52. Further, the first narrow teeth 58 are formed with the same cross sectional shape.

Stated otherwise, the first narrow teeth 58 are set to have a smaller width dimension than the width of the first gear teeth 52, and are formed at positions corresponding to each of the first locator grooves 54a, 54b, respectively.

The second gear 46 is disposed upwardly of the first gear 44 substantially in the same plane therewith. A shaft member 60, which is provided on and projects from the center thereof, is supported rotatably by insertion into a hole 62 of the gear holder 48. Similar to the first gear 44, on an outer circumferential region of the second gear 46, a plurality of second gear teeth 64 of a concave/convex shape are formed. The second gear teeth 64 are enmeshed with the first gear teeth 52 of the first gear 44. A predetermined region along the circumferential direction of the second gear 46 is reduced in diameter in a radial inward direction, and the second gear teeth 64 are not provided on such a reduced diameter region.

Further, in an end part of the outer circumferential region on the second gear 46, the first locator part 56 is formed at a position between the second gear teeth 64, whereas on a central part on the outer circumferential region, the second locator part 66 is formed at a position between the second gear teeth 64.

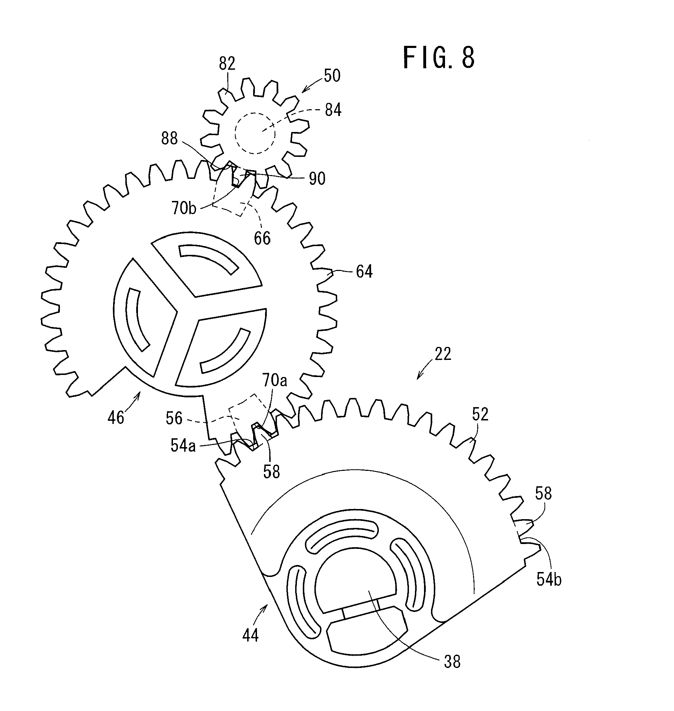

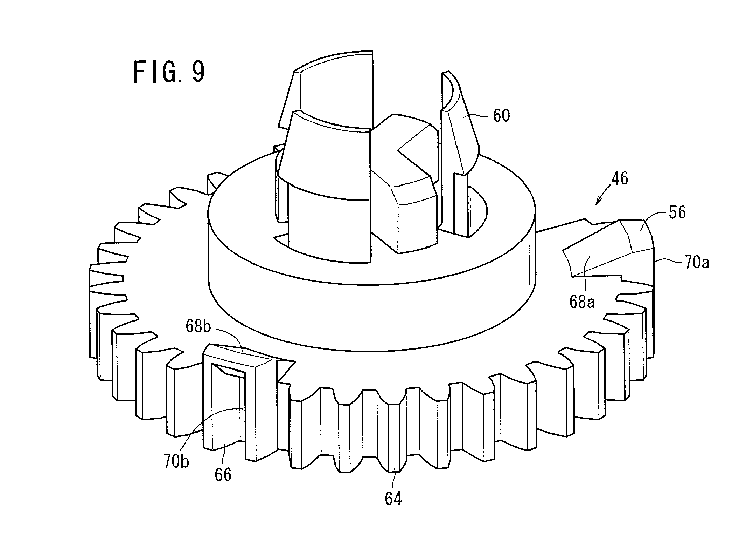

The first and second locator parts 56, 66 are formed respectively by two adjacent second gear teeth 64, and wall portions 68a, 68b that join the second gear teeth 64 to one another. Observed from the outer circumferential direction of the second gear 46, the first and second locator parts 56, 66 are formed with U-shapes in cross section, which open toward the side opposite from the gear holder 48 (see FIGS. 6 and 9). The first and second locator parts 56, 66 are formed at substantially the same diameter as the tooth-end diameter of the second gear teeth 64, and together therewith, at an inside part surrounded by two of the second gear teeth 64 and the wall portions 68a, 68b, the first and second locator parts 56, 66 include engagement grooves 70a, 70b (see FIG. 8), which engage with a first narrow tooth 58 and second narrow tooth 90 (to be described later).

When the second gear 46 engages with respect to the first gear 44, the first gear teeth 52 and the second gear teeth 64 become enmeshed, and together therewith, upon rotation of the first and second gears 44, 46, the first locator part 56 engages within one of the first locator grooves 54a on the first gear 44, whereas the second locator part 66 is engaged with respect to the other first locator groove 54b.

Further, when the first and second locator parts 56, 66 are engaged respectively within the first locator grooves 54a, 54b on the first gear 44, the first narrow teeth 58 of the first gear 44 become engaged with respect to the engagement grooves 70a, 70b formed therein, whereupon the driving force from the first gear 44 is transmitted to the second gear 46 via the first narrow teeth 58 and the engagement grooves 70a, 70b.

More specifically, when the driving force transmission mechanism 22 including the first and second gears 44, 46 is assembled, by insertion of the first locator part 56 into the first locator groove 54a of the first gear 44, such parts function mutually as a positioning means for performing positioning in the direction of rotation. Together therewith, by engagement of the first narrow tooth 58 in the engagement grooves 70a, 70b formed therein, a driving force transmitting function also is provided, by which the driving force from the first gear 44 can reliably be transmitted to the second gear 46.

The gear holder 48 is formed in a substantially triangular shape and tapers from a lower portion toward an upper portion thereof. The gear holder 48 is connected to the housing 36 of the drive source 20 through a first mounting section 72 formed at the lower portion thereof, and is fixed to a side wall of the first divided casing 26 through a second mounting section 74 formed at the upper portion.

More specifically, the first mounting section 72 is fastened together to the upper portion of the housing 36 by two bolts 76, whereas the second mounting section 74 is fixed by a single bolt 76 while being separated a predetermined distance from the side surface of the first divided casing 26.

Further, at a substantially central portion of the gear holder 48, the hole 62 is formed through which the shaft member 60 of the second gear 46 is inserted, such that by insertion and fitting of the shaft member 60, the second gear 46 is retained in a rotatable manner. Moreover, the second gear 46 is arranged between the gear holder 48 and the side wall of the first divided casing 26.

Upwardly of the hole 62, a shaft groove (support hole) 78 is formed, which extends upwardly in an inclined fashion toward the second mounting section 74. An end of a later-described damper shaft 50 is supported rotatably with respect to the shaft groove 78. The shaft groove 78 is formed in a straight shape while tapering gradually in a direction separating away from the hole 62, the end thereof being formed with a semicircular shape in cross section.

In the interior of the casing 12, a damper shaft 50 is provided that confronts the inner wall surface of the air mixing damper 18, the damper shaft 50 being disposed along the widthwise direction of the casing 12. One end of the damper shaft 50 is supported rotatably with respect to a center plate (not shown) sandwiched between the first divided casing 26 and the second divided casing 28, whereas the other end thereof is inserted into a shaft hole 80 (see

FIG. 1) provided in a side of the first divided casing 26.

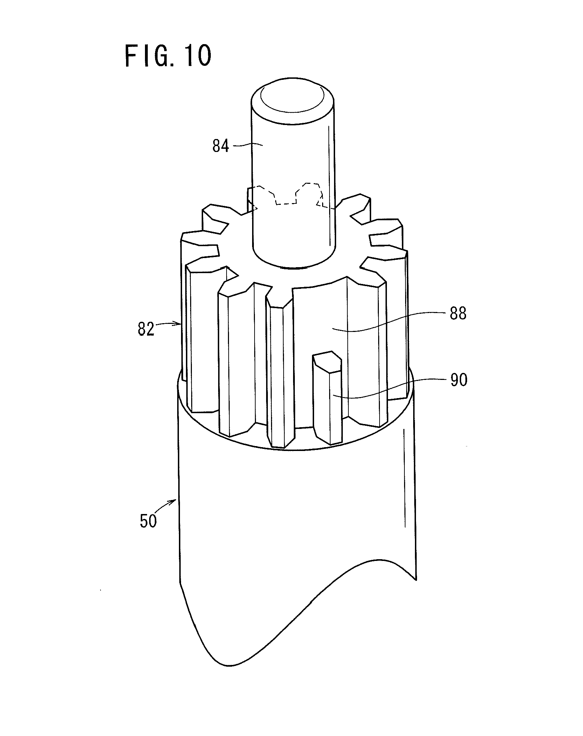

Further, on the other end of the damper shaft 50, as shown in FIG. 10, a damper gear 82 is formed on the outer side of the first divided casing 26, which is enmeshed with the second gear 46. Together therewith, further from the end of the damper gear 82, a support shaft 84 having a radially inward reduced diameter is formed, which is inserted into and supported rotatably in the shaft groove 78 of the gear holder 48. In greater detail, the support shaft 84 is axially supported in the end of the shaft groove 78 that is formed with the semicircular shape in cross section.

More specifically, opposite ends of the damper shaft 50 are supported by the center plate and the gear holder 48, such that the damper shaft 50 is supported rotatably in the casing 12.

On the other hand, on the damper shaft 50, pinion gears 86 are formed respectively at positions facing the rack members 32 of the air mixing damper 18 for being enmeshed respectively with respect to the rack member 32. More specifically, by rotation of the damper shaft 50, under engagement of the pinion gear 86 and the rack member 32, the air mixing damper 18 is moved in upward and downward directions along the guide walls 34a, 34b of the casing 12.

The damper gear 82 has a predetermined width along the axial direction of the damper shaft 50, with a plurality of gear teeth being formed along the outer circumferential surface thereof. In addition, a second locator groove 88, from which one of the gear teeth is removed, is formed on the damper gear 82. The second locator groove 88 is formed with a predetermined width centrally about the position of a central gear tooth from among three adjacent gear teeth, and is formed so as to enable insertion therein of the second locator part 66 that makes up part of the second gear 46.

The second locator groove 88 is formed along the thickness direction of the damper gear 82. The second narrow tooth 90 is formed in the second locator groove 88, having a width dimension that extends from one end side directing one end of the damper shaft 50 to the other end side thereof, and which is roughly half the width of the other gear teeth. The second narrow tooth 90 is formed at the same pitch and with the same cross sectional shape as the other gear teeth. More specifically, the second narrow tooth 90 is constituted with a width dimension roughly half that of one gear tooth.

Additionally, when the damper gear 82 and the second gear 46 are enmeshed with each other, the second narrow tooth 90 engages within the engagement groove 70b in the second locator part 66 (see FIG. 8).

More specifically, when the second gear 46 and the damper gear 82 are assembled, by insertion of the second locator part 66 into the second locator groove 88 of the second gear 46, such parts function mutually as a positioning means for carrying out positioning in the direction of rotation. Together therewith, by engagement of the second narrow tooth 90 in the engagement groove 70b formed therein, a driving force transmitting function also is provided, by which the driving force from the second gear 46 can reliably be transmitted to the damper gear 82.

The vehicular air conditioning apparatus 10 according to the present invention is constructed basically as described above. Next, a situation shall be described by which the driving force transmission mechanism 22 is assembled with respect to the casing 12, the drive source 20, and the air mixing damper 18.

Initially, the first gear 44 is mounted on the drive shaft 38 of the drive source 20, and the first mounting section 72 of the gear holder 48 is fixed by the bolts 76 with respect to the housing 36 of the drive source 20. Additionally, the first locator part 56 of the second gear 46 is inserted with respect to the first locator groove 54a of the first gear 44, and in a state where the first narrow tooth 58 engages within the engagement groove 70a, the shaft member 60 of the second gear 46 is inserted and fitted into the hole 62 of the gear holder 48.

Owing thereto, in a state where relative positioning in the direction of rotation between the first gear 44 and the second gear 46 is brought about by the first locator part 56 and the first locator groove 54a, the first and second gears 44, 46 are assembled through the gear holder 48, thus constituting a driving force transmission unit 92, which is connected integrally to the drive source 20.

Next, the driving force transmission unit 92 is assembled onto a side wall of the first divided casing 26 that constitutes the casing 12. In this case, the mounting bracket 40 already is installed through plural bolts 42 on a lower part of the drive source 20, whereas the air mixing damper 18 and the damper shaft 50 are accommodated in the interior of the casing 12, and the damper gear 82 of the damper shaft 50 is in a state of projecting from the side surface through the shaft hole 80.

In the above-described condition, an operator places the second gear 46 in confronting relation with respect to the first divided casing 26, and while gripping the driving force transmission unit 92 with the mounting bracket 40 oriented downward and the second mounting section 74 on the gear holder 48 oriented upwardly, causes the driving force transmission unit 92 to approach the side surface of the first divided casing 26. Additionally, the support shaft 84 of the damper shaft 50 is inserted through the shaft groove 78 of the gear holder 48, and together therewith, the second gear 46 is made to engage with the damper gear 82 of the damper shaft 50. At this time, assembly is performed such that the second locator part 66 of the second gear 46 is inserted into the second locator groove 88 of the damper gear 82, and further, the second narrow tooth 90 of the damper gear 82 engages within the engagement groove 70b of the second locator part 66.

Owing thereto, relative positioning between the second gear 46 and the damper gear 82 in the direction of rotation is brought about by the second locator part 66, and after proper positioning of the second gear 46 and the damper gear 82 has been confirmed, the mounting bracket 40 is fixed to the side surface of the first divided casing 26, while simultaneously, the second mounting section 74 of the gear holder 48 is fixed to the side surface of the first divided casing 26 by the bolt 76.

As a result, the second gear 46, which is supported by the gear holder 48, is assembled onto the side surface of the casing 12 in a state whereby the first gear 44 connected to the drive source 20 and the damper gear 82 of the damper shaft 50 that causes rotary movement (turning) of the air mixing damper 18 are mutually enmeshed respectively with each other. More specifically, the first and second gears 44, 46 and the damper gear 82 are assembled together in a condition of mutual positioning therebetween along the direction of rotation.

Next, operations and effects of the vehicular air conditioning apparatus 10, on which the driving force transmission unit 92 has been assembled in the above manner, shall briefly be explained.

First, the driver, by operating a non-illustrated operation switch for performing temperature adjustment inside the vehicle compartment, causes a control signal to be output with respect to the drive source 20 through a controller (not shown).

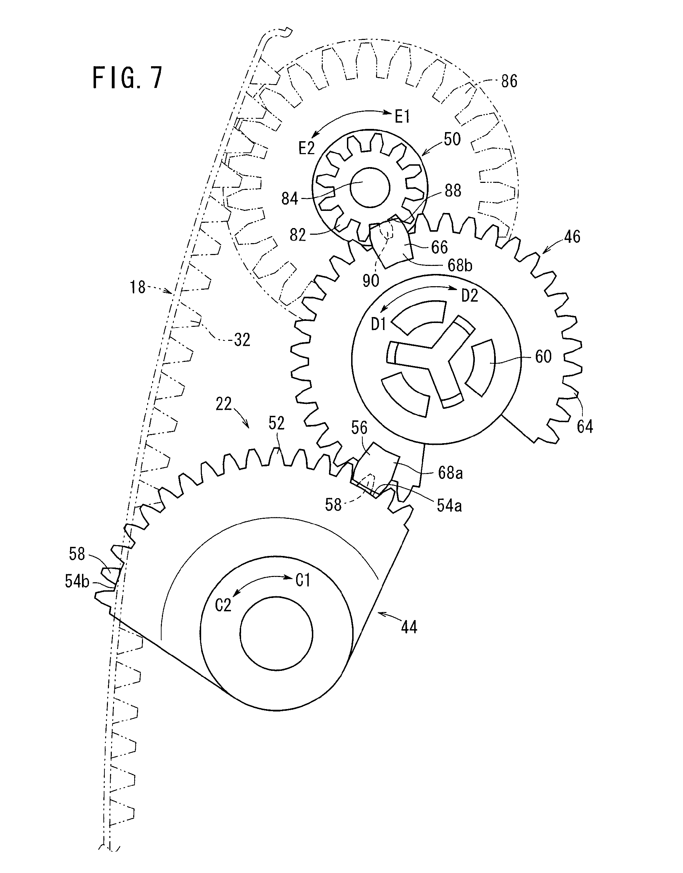

For example, in the case that a heating operation is performed in the vehicular air conditioning apparatus 10 sworn in FIG. 2, by switching to an operational mode by means of the operation switch, the control signal output to the drive source 20 through the non-illustrated controller is switched, and the drive shaft 38 is rotated under a driving action of the drive source 20. Owing thereto, the first gear 44 is rotated in a clockwise direction (the direction of arrow C1 in FIG. 7), and along therewith, the second gear 46 is rotated in a counterclockwise direction (the direction of arrow D1 in FIG. 7) and the damper gear 82 is rotated in a clockwise direction (the direction of arrow E1 in FIG. 7).

In addition, as a result of the driving force from the drive source 20, the damper shaft 50 is rotated through a predetermined angle in a counterclockwise direction (the direction of arrow D1), whereupon, due to engagement of the pinion gear 86 and the rack member 32, the air mixing damper 18 shown in FIG. 2 is moved upwardly a predetermined distance along the guide walls 34a, 34b so as to separate from the heater core 16.

Owing thereto, the air mixing damper 18, which is fitted to close between the evaporator 14 and the heater core 16, moves, whereupon a portion of the air that has passed through the evaporator 14 flows through the heater core 16, which is disposed downstream from the evaporator 14, and passes to the interior. As a result, a portion of the air, after being heated by the heater core 16, is mixed with air that has passed only through the evaporator 14, whereby the air is adjusted in temperature in the interior of the casing 12. Then, the temperature adjusted air, after passing through passages inside the casing 12, is blown out into the vehicle compartment from outlet ports, for example, in the vicinity of the feet of passengers in the vehicle.

On the other hand, in the case that a cooling operation is performed in the vehicular air conditioning apparatus 10, by switching to an operational mode by means of the operation switch, the drive shaft 38 is rotated in an opposite direction under a driving action of the drive source 20, and the first gear 44 is rotated together with the drive shaft 38 in a counterclockwise direction (the direction of arrow C2 in FIG. 7). As a result, the second gear 46, through engagement with the first gear 44, is rotated in a clockwise direction (the direction of arrow D2 in FIG. 7), and the damper gear 82, through engagement with the second gear 46, is rotated in a counterclockwise direction (the direction of arrow E2 in FIG. 7).

Owing thereto, the damper shaft 50 is rotated counterclockwise (the direction of arrow E2) by the driving force from the drive source 20, and the air mixing damper 18, which is engaged with the pinion gear 86 through the rack member 32, is moved along the guide walls 34a, 34b to the downward side facing the heater core 16.

As a result, since the flow of air that has passed between the evaporator 14 and the heater core 16 is blocked by the air mixing damper 18, air (cooled air) supplied from the blower fan and which has passed through the evaporator 14 does not flow through to the side of the heater core 16, but flows directly to the outlet ports through passages inside the casing 12, and is blown out into the vehicle compartment from outlet ports, for example, which are capable of blowing air in the vicinity of faces of passengers in the vehicle.

In the foregoing manner, with the present embodiment, in the driving force transmission mechanism 22, which is capable of transmitting a driving force from the drive source 20 to the air mixing damper 18 accommodated in the casing 12, a structure is provided comprising the second gear 46, which is enmeshed with the first gear 44 connected to the drive source 20, and further is enmeshed with the damper shaft 50 that causes the air mixing damper 18 to turn, and the second gear 46 is rotatably supported with respect to the gear holder 48.

As a result of the aforementioned structure, even in the case that, in the casing 12, the drive source 20 and the air mixing damper 18, which is turned by the driving force from the drive source 20, are arranged at positions separated from each other, the driving force output from the first gear 44 can be transmitted reliably and efficiently to the damper shaft 50 through the second gear 46. Together therewith, since the gear holder 48 in which the second gear 46 is supported can easily be fixed with respect to the first divided casing 26 and the drive source 20, ease of assembly of the vehicular air conditioning apparatus 10 including the driving force transmission mechanism 22 can be improved.

Further, because the driving force of the drive source 20 is transmitted efficiently to the air mixing damper 18 via a gear mechanism defined by the first and second gears 44, 46 and the damper shaft 50 that constitute the driving force transmission mechanism 22, the air mixing damper 18 is capable of undergoing switching movements with high precision, and along therewith, the mixing ratio of cool air and warm air can be controlled highly precisely by the air mixing damper 18.

Furthermore, because, by insertion of the damper shaft 50 through the shaft groove 78 of the gear holder 48, a constant distance is maintained between the damper shaft 50 and the second gear 46 supported in the gear holder 48, mutual separation of the damper shaft 50 and the second gear 46 away from each other can be avoided. More specifically, a problem in which the driving force of the second gear 46 does not get transmitted to the damper shaft 50, due to the damper shaft 50 and the second gear 46 moving in directions away from each other and resulting in release of the enmeshed state therebetween, can be avoided. Stated otherwise, changes in the enmeshed condition between the second gear 46 and the damper shaft 50 are avoided.

As a result, the driving force, which is transmitted from the drive source 20 to the second gear 46 via the first gear 44, can be reliably transmitted to the damper shaft 50, thus enabling driving of the air mixing damper 18 to be controlled.

In a vehicular air conditioning apparatus (10), a driving force transmission mechanism (22) is provided, which causes a switching operation of an air mixing damper (18) disposed in a casing (12) to be performed under a driving action of a drive source (20). The driving force transmission mechanism (22) includes a first gear (44) installed on the drive source (20), a second gear (46) enmeshed with the first gear (44), and a damper shaft (50), which is enmeshed with the second gear (46) and with a rack member (32) of the air mixing damper (18). The second gear (46) is supported rotatably on a gear holder (48), while the gear holder (48) is installed on a side surface of the casing (12).

## Claims

1. A vehicular air conditioning apparatus for adjusting a temperature of air that is introduced from exterior or interior of a vehicle to a predetermined temperature, and for supplying the air to the vehicle interior, comprising:
a casing (12);
a switching damper (18) disposed in interior of the casing (12) for switching a communication state of a flow passage through which the air flows;
a drive section (20) disposed on the casing (12), which is rotatably driven upon supply of electricity thereto; and
a driving force transmission mechanism (22) including a drive gear (44) connected to a rotary shaft (38) of the drive section (20), a damper gear (82) disposed on a rotary shaft (50) of the switching damper (18), a transmission gear (46) disposed between the drive gear (44) and the damper gear (82) and enmeshed mutually therewith, and a holder (48) installed on the casing (12) for rotatably holding the transmission gear (46).

2. A vehicular air conditioning apparatus according to claim 1, wherein a support hole (78) is included in the holder (48) for rotatably supporting the damper gear (82), and the support hole (78) extends along a straight line in a direction separating away from a center of the transmission gear (46) enmeshed with the damper gear (82).

3. A vehicular air conditioning apparatus according to claim 2, wherein a support shaft (84), which is inserted through the support hole (78), is formed on an end of the damper gear (82).

4. A vehicular air conditioning apparatus according to claim 2, wherein the support hole (78) is formed with a tapered shape that tapers progressively in a direction separating away from the transmission gear (46).

5. A vehicular air conditioning apparatus according to claim 1, wherein the drive gear (44), the transmission gear (46), and the damper gear (82) are formed substantially in a common plane along the holder (48).
